# EUROPEAN PATENT APPLICATION

(11) **EP 2 753 129 A1**
(43) Date of publication of application: **09.07.2014**
(21) Application number: 14150026.4
(22) Date of filing: 02.01.2014
(51) Int. Cl.: H04W 52/02, H04W 4/02, H04W 88/02, H04W 88/00, H04W 8/00, H04L 29/08

(54) **Method and apparatus for controlling short range wireless communication**

(30) Priority: 02.01.2013 KR 20130000202
(71) Applicant: Samsung Electronics Co., Ltd, Gyeonggi-do 443-742 (KR)
(72) Inventor: Choi, Han-Sol, Gyeonggi-do (KR)
(74) Representative: Gover, Richard Paul

(57) **Abstract**

A method and device for controlling short range wireless communication in an electronic device are provided. The method includes detecting a moving speed of the electronic device; and if the detected moving speed exceeds a reference speed, stopping a short range wireless communication module.

## Description

### BACKGROUND OF THE INVENTION

### 1. Field of the Invention

The present invention generally relates to a method and apparatus for controlling short range wireless communication in consideration of the moving speed of an electronic device, and more particularly, for enabling a short range wireless communication module to be deactivated based on the speed of the electronic device.

### 2. Description of the Related Art

Portable terminals have become necessary articles for people due to their portability, and have evolved into multimedia devices that provide various services such as voice and video call functions, an information input/output function, and a data transmission/reception function.

Recently, because of the advantages resulting from wireless communication using mobile devices, the use of short range wireless communication has been increasing. Herein, the term "short range wireless communication" refers to communication enabling the wireless exchange of information between electronic devices connected to one another that are within range of one another, and may include wireless LAN, Bluetooth, Near Field Communication (NFC), ZigBee, etc.

When a connection to short range wireless communication network and/or a short range wireless communication electronic device is released by an electronic device, the short range wireless communication is maintained in an idle state unless a user terminates the short range wireless communication directly, and the electronic device continuously detects at least one short range wireless communication network and a short range wireless communication electronic device. For example, when the user goes out while using Wi-Fi, the electronic device maintains the activation state of the Wi-Fi continuously and continuously detects short range wireless communication electronic devices along the user's traffic path unless the electronic device's user deactivates the Wi-Fi. Accordingly, battery consumption of the electronic device is similar to that in a state of being connected to the short range wireless communication network, even though network disconnection is caused. Herein, the term "network disconnection" refers to a situation in which the electronic device may not use networks while passing through processes of detection of short range wireless communication networks, connection to short range wireless communication networks, disconnection, and redetection of short range wireless communication networks.

### SUMMARY OF THE INVENTION

An aim of certain embodiments of the present invention is to provide an apparatus and method for controlling short range wireless communication in consideration of the moving speed of an electronic device in the electronic device.

Another aim of certain embodiments of the present invention is to provide an apparatus and method for enabling a short range wireless communication module to be deactivated when the speed of an electronic device exceeds a reference speed in the electronic device.

Another aim of certain embodiments of the present invention is to provide an apparatus and method for enabling a short range wireless communication module to be deactivated when the speed of an electronic device is maintained at more than a reference speed for a reference time interval in the electronic device.

In accordance with an aspect of the present invention, a method for controlling short range wireless communication in an electronic device includes detecting a moving speed of the electronic device; and when the detected moving speed exceeds a reference speed, deactivating a short range wireless communication module.

In accordance with another aspect of the present invention, an electronic device includes at least one processor; at least one memory; and at least one program stored in the memory and configured to be executable by the processor, wherein when executing the program the processor is configured to detect a moving speed of the electronic device; and when the detected moving speed exceeds a reference speed, to deactivate a short range wireless communication module.

Alternatively, the device may be an electronic device comprising: at least one processor; at least one memory; and at least one program stored in the memory and configured to be executable by the processor, wherein when executing the prgram the processor is configured to: detect a moving speed of the electronic device; and when the detected moving speed exceeds a reference speed, to stop a short range wireless communication module.

Preferably, the device is the electronic device wherein the processor stops the short range wireless communication module by deactivating the short range wireless communication module.

Preferably, the device is the electronic device wherein the moving speed is calculated in consideration of a distance moved from a first point to a second point and a movement time.

Preferably, the device is the electronic device wherein the processor is configured to detect the moving speed of the electronic device by using at least one of a Global Positioning System (GPS) and a gravity sensor (G-sensor).

Preferably, the device is the electronic device wherein the processor is configured to deactivate a function for detecting adjacent devices using the short range wireless communication module when the detected moving speed exceeds the reference speed.

Preferably, the device is the electronic device wherein the processor is configured to stop the short range wireless communication module when the detected moving speed is maintained at more than the reference speed for a reference time interval.

Preferably, the device is the electronic device wherein the processor is configured to detect the moving speed of the electronic device when the short range wireless communication module is stopped, and start the short range wireless communication module when the detected moving speed is less than or equal to the reference speed.

Preferably, the device is the electronic device wherein the processor is configured to detect the moving speed of the electronic device after a reference time interval when the short range wireless communication module is stopped.

Preferably, the device is the electronic device wherein the processor is configured to activate a function for detecting adjacent devices by using the short range wireless communication module when the detected moving speed is less than or equal to the reference speed.

Preferably, the device is the electronic device wherein the processor is configured to activate the short range wireless communication module when the detected moving speed is maintained at less than the reference speed for more than a reference time interval.

Another aspect of the invention provides a computer program comprising instructions arranged, when executed, to implement a method in accordance with any one of the above-described aspects.

In accordance with another aspect of the present invention, a non-transitory computer readable storage medium is provided having one or more programs stored thereon. The one or more programs comprises instructions, which when executed by one or more processors in an electronic device, cause the electronic device to perform a method for controlling short range wireless communication, which includes detecting a moving speed of the electronic device; and when the detected moving speed exceeds a reference speed, deactivating a short range wireless communication.

### BRIEF DESCRIPTION OF THE DRAWINGS

The above and other aspects, characteristics, and advantages of certain embodiments of the present invention will become more apparent from the following detailed description when taken in conjunction with the accompanying drawings, in which:
FIG. 1 is a block diagram illustrating an electronic device according to an embodiment of the present invention;
FIG. 2 is a block diagram illustrating a processor according to an embodiment of the present invention;
FIG. 3A is a flowchart illustrating a process of controlling short range wireless communication according to the moving speed of an electronic device according to an embodiment of the present invention;
FIG. 3B is a block diagram illustrating a configuration of an electronic device for controlling short range wireless communication according to the moving speed of the electronic device according to an embodiment of the present invention;
FIG. 4 is a flowchart illustrating a process of controlling short range wireless communication according to the moving speed of an electronic device according to an embodiment of the present invention;
FIG. 5 is a flowchart illustrating a process of controlling short range wireless communication according to the moving speed of an electronic device according to an embodiment of the present invention; and
FIGS. 6A to 6D are diagrams illustrating screen configurations for controlling short range wireless communication in an electronic device according to an embodiment of the present invention.

### DETAILED DESCRIPTION OF THE EMBODIMENTS OF THE PRESENT INVENTION

Various embodiments of the present invention will be described herein below with reference to the accompanying drawings. In the following description, detailed descriptions of well-known functions or configurations will be omitted since they would unnecessarily obscure the subject matter of the present invention. Also, the terms used herein are defined according to the functions of the present invention. Thus, the terms may vary depending on users' or operators' intentions or practices. Therefore, the terms used herein must be understood based on the descriptions made herein.

In accordance with an embodiment of the present invention, technology is provided for controlling short range wireless communication in an electronic device.

In the following description, examples of the electronic device to which the present invention applies may include, but are not limited to, a mobile communication terminal, a Personal Digital Assistant (PDA), a laptop computer, a smart phone, a netbook, a television, a Mobile Internet Device (MID), an Ultra Mobile Personal Computer (UMPC), a tablet PC, a navigation device, and an MP3 player.

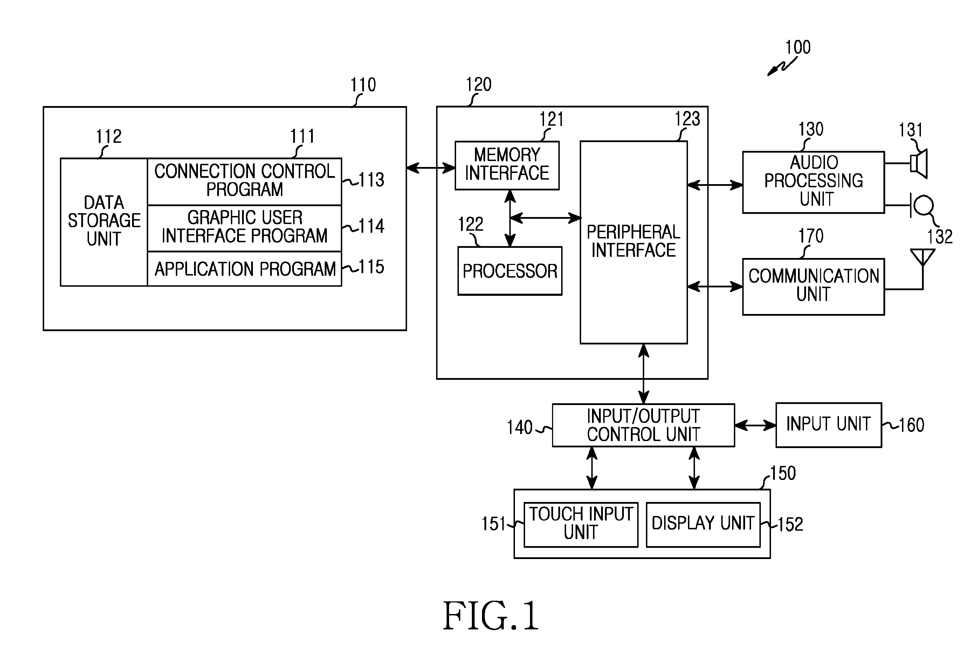

FIG. 1 illustrates a block diagram of an electronic device according to an embodiment of the present invention.

Referring to FIG. 1, the electronic device 100 may include a memory 110, a processor unit 120, an audio processing unit 130, an input/output control unit 140, a touchscreen 150, an input unit 160, and a communication unit 170. In this case, there may be a number of memories 110.

The memory 110 may include a program storage unit 111 for storing a program for controlling an operation of the electronic device 100, and a data storage unit 112 for storing data generated during the execution of a program.

For example, the program storage unit 111 may include a connection control program 113, a Graphic User Interface (GUI) program 114, and at least one application program 115. In this case, the programs stored in the program storage unit 111 may be expressed as an instruction set that is a collection of instructions.

The data storage unit 112 may include at least one software component for storing connection information. For example, the data storage unit 112 stores server information for data transmission/reception.

The connection control program 113 may include at least one software component for controlling short range wireless communication. For example, when the electronic device activates a short range wireless communication module, the communication control program 113 detects the moving speed of the electronic device. In this case, the connection control program 113 may detect the moving speed by using at least one of a Global Positioning System (GPS) and a gravity sensor (G-sensor).

After detection of the moving speed of the electronic device, the connection control program 113 determines whether the moving speed exceeds a reference speed for detection of adjacent devices, each of which includes a short range wireless communication module. When the moving speed of the electronic device exceeds the reference speed, the connection control program 113 recognizes that detection of adjacent devices, each of which includes the short range wireless communication module, is not performed. As a result, the connection control program 113 stops, e.g., deactivates, the short range wireless communication module. In this case, the connection control program 113 may deactivate a function for detecting adjacent devices by using the short range wireless communication module.

As another example, after detection of the moving speed of the electronic device, the connection control program 113 may determine whether the moving speed of the electronic device is maintained at more than the reference speed for a reference time interval. When the moving speed of the electronic device is maintained at more than the reference speed for the reference time interval, the connection control program 113 may recognize that detection of adjacent devices, each of which includes the short range wireless communication module, is not performed. As a result, the connection control program 113 deactivates the short range wireless communication module. In this case, the connection control program 113 may deactivate a function for detecting adjacent devices by using the short range wireless communication module.

The graphic user interface program 114 may include at least one software component for providing a graphic user interface on the display unit 152 of touchscreen 150. For example, the graphic user interface program 114 displays results of the detection of the adjacent devices each of which includes the short range wireless communication module which is performed by the connection control program 113, on the display unit 152 of touchscreen 150.

The application program 115 may include a software component for at least one application program installed in the electronic device 100.

The processor unit 120 may include a memory interface 121, at least one processor 122, and a peripheral interface 123. In this case, the memory interface 121, the at least one processor 122 and the peripheral interface 123 which are included in the processor unit 120 may be integrated into at least one integrated circuit or be implemented as separate components.

The memory interface 121 controls access to the memory 110 by components, such as the processor 122 or the peripheral interface 123.

The peripheral interface 123 controls connections of the input/output peripherals of the electronic device 100 to the processor 122 and the memory interface 121.

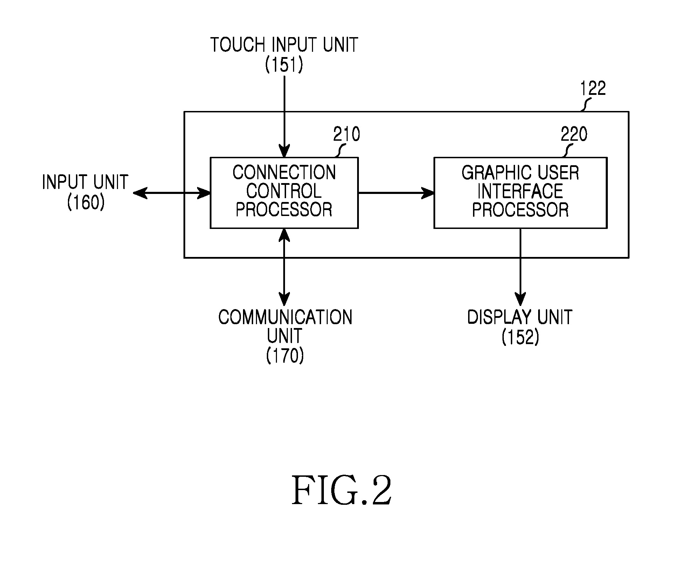

The processor 122 enables the electronic device 100 to provide various multimedia services using at least one software program. In this case, the processor 122 performs control to execute at least one program stored in the memory 110 and provide a service according to a corresponding program. For example, the processor 122 may be configured as illustrated in FIG. 2 in order to execute the connection control program 113 and control short range wireless communication.

The audio processing unit 130 provides an audio interface between a user and the electronic device 100 through a speaker 131 and a microphone 132.

The input/output control unit 140 provides an interface between an input/output device, such as the touchscreen 150 and the input unit 160, and the peripheral interface 123.

The touchscreen 150 is an input/output device for performing the input and output of information and may include a touch input unit 151 and a display unit 152.

The touch input unit 151 provides touch information detected through a touch panel to the processor unit 120 through the input/output control unit 140. In this case, the touch input unit 151 provides touch information generated by an electronic pen or a user's finger to the processor unit 120 through the input/output control unit 140.

The display unit 152 displays the state information of the electronic device 100, characters input by the user, moving pictures, still pictures, etc. For example, the display unit 152 displays display data provided from the graphic user interface program 114.

The input unit 160 provides input data generated by the selection of the user to the processor unit 120 through the input/output control unit 140. For example, the input device 160 is configured by including only control buttons for control of the electronic device 100. In another example, the input device 160 may be configured by a keypad for receiving input data from the user.

The communication unit 170 may include at least one software component for performing communication functions for voice communication and data communication. In this case, the communication unit 170 may be classified into a plurality of communication submodules which support different communication networks. For example, the communication networks may include, but are not limited to, a Global System for Mobile communication (GSM) network, an Enhanced Data GSM Environment (EDGE) network, a Code Division Multiple Access (CDMA) network, a W-Code Division Multiple Access (W-CDMA) network, a Long Term Evolution (LTE) network, an Orthogonal Frequency Division Multiple Access (OFDMA) network, a wireless LAN, a Bluetooth network, and an NFC network.

FIG. 2 illustrates a block diagram of a processor according to an embodiment of the present invention.

Referring to FIG. 2, processor 122 includes a connection control processor 210 and a graphic user interface processor 220.

The connection control processor 210 executes the connection control program 113 of the program storage unit 111 and controls short range wireless communication. For example, when the electronic device activates the short range wireless communication module, the connection control processor 210 detects the moving speed of the electronic device 210. In this case, the connection control processor 210 may detect the moving speed by using at least one of the GPS and the G-sensor. After the detection of the moving speed of the electronic device, the connection control program 210 determines whether the moving speed exceeds a reference speed for detection of adjacent devices, each of which includes a short range wireless communication module. When the moving speed of the electronic device exceeds the reference speed, the connection control program 210 recognizes that detection of adjacent devices, each of which includes the short range wireless communication module, is not performed. Therefore, the connection control program 210 deactivates the short range wireless communication module. In this case, the connection control program 210 may deactivate a function for detecting adjacent devices by using the short range wireless communication module.

In another example, after detection of the moving speed of the electronic device, the connection control processor 210 determines whether the moving speed of the electronic device is maintained at more than the reference speed for a reference time interval. When the moving speed of the electronic device is maintained at more than the reference speed for the reference time interval, the connection control processor 210 may recognize that detection of adjacent devices, each of which includes the short range wireless communication module, is not performed. Therefore, the connection control processor 210 deactivates the short range wireless communication module. In this case, the connection control processor 210 may deactivate the function for detecting adjacent devices by using the short range wireless communication module.

The graphic user interface processor 220 executes the graphic user interface program 114 of the program storage unit 111 to provide a user interface with graphics on the display unit 152. For example, the graphic user interface processor 220 displays results of the detection of adjacent devices each of which includes the short range wireless communication module, which is performed by the connection control program 113, on the display unit 152.

In the above-described embodiment, the connection control processor 210 of the electronic device executes the connection control program 113 and controls short range wireless communication. In another embodiment, the electronic device may include a separate connection control processing unit including the connection control program 113.

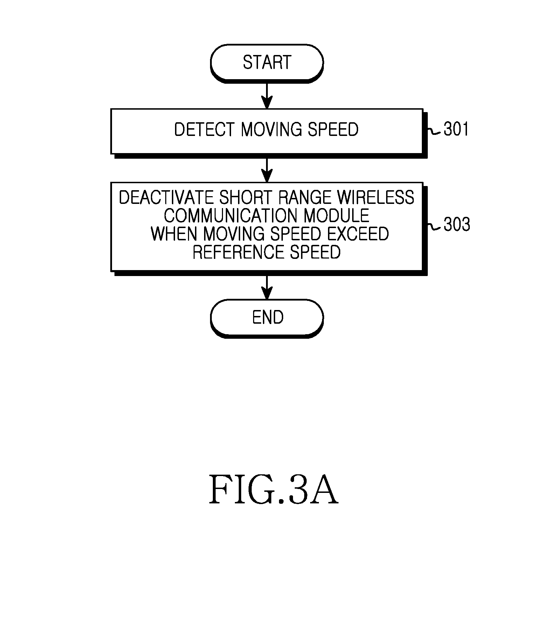

FIG. 3A illustrates a process of controlling short range wireless communication according to the moving speed of an electronic device in the electronic device according to an embodiment of the present invention.

Referring to FIG. 3A, in step 301, the moving speed of the electronic device is detected. Herein, the moving speed of the electronic device refers to a value generated by dividing a distance moved from a first point to a second point by a movement time. In this case, the electronic device may detect the moving speed by using at least one of the GPS and the G-sensor. For example, it is possible to detect the moving speed of the electronic device in consideration of the location information which is identified by a GPS signal and the time at which the GPS signal is received. In another example, when it is determined that the moving speed is maintained at more than a predetermined acceleration for the reference time interval, the electronic device may recognize that movement is kept constant. In another example, when the GPS signal is not detected after detection of the moving speed using the GPS signal, the electronic device may detect the moving speed by using the G-sensor in consideration of variations in speed from a time point at which the GPS signal is not detected.

After detecting the moving speed of the electronic device, the electronic device deactivates the short range wireless communication module when the moving speed of the electronic device exceeds a reference speed in step 303. For example, after detection of the moving speed of the electronic device, the electronic device determines whether the moving speed exceeds a reference speed for detection of adjacent devices, each of which includes a short range wireless communication module. When the moving speed exceeds the reference speed, the electronic device recognizes that the detection of adjacent devices, each of which includes the short range wireless communication module, is not performed. Accordingly, the electronic device deactivates the short range wireless communication module.

In another example, it is possible to determine whether the moving speed of the electronic device is maintained at more than a reference speed for a reference time interval. When the moving speed of the electronic device is maintained at more than the reference speed for the reference time interval, the electronic device may recognize that detection of adjacent devices, each of which includes the short range wireless communication module, is not performed. Accordingly, the electronic device deactivates the short range wireless communication module. In this case, the electronic device may deactivate a function for detecting adjacent devices by using the short range wireless communication module.

Thereafter, the electronic device ends the process.

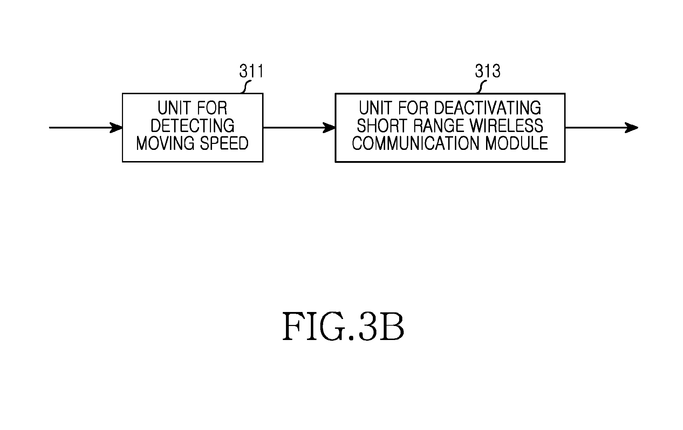

As described above, respective processes for controlling short range wireless communication in the electronic device may be implemented by an apparatus for controlling short range wireless communication in the electronic device as illustrated in FIG. 3B.

FIG. 3B illustrates a block diagram of an electronic device for controlling short range wireless communication according to the moving speed of the electronic device according to an embodiment of the present invention.

Referring to FIG. 3B, the electronic device may include a first unit 311 for detecting the moving speed of the electronic device and a second unit 313 for deactivating a short range wireless communication module.

The first unit 311 detects the moving speed of the electronic device. Herein, the moving speed of the electronic device refers to a value generated by dividing a distance moved from a first point to a second point by a movement time. In this case, the electronic device may detect the moving speed by using at least one of a GPS and a G-sensor. For example, it is possible to detect the moving speed of the electronic device in consideration of the location information which is identified by a GPS signal and the time at which the GPS signal is received. As another example, when it is determined that the moving speed is maintained at more than a predetermined acceleration for the reference time interval, the electronic device may recognize that movement is kept constant. As another example, when the GPS signal is not detected after detection of the moving speed using the GPS signal, the electronic device may detect the moving speed by using the G-sensor in consideration of variations in speed from a time point at which the GPS signal is not detected.

The second unit 313 deactivates the short range wireless communication module. For example, after detecting the moving speed of the electronic device, the electronic device determines whether the moving speed exceeds a reference speed for detection of adjacent devices, each of which includes the short range wireless communication module. When the moving speed exceeds the reference speed, the electronic device recognizes that the detection of adjacent devices, each of which includes short range wireless communication module, is not performed. Accordingly, the electronic device deactivates the short range wireless communication module.

In another example, it is possible to determine whether the moving speed of the electronic device is maintained at more than the reference speed for a reference time interval. When the moving speed of the electronic device is maintained at more than the reference speed for the reference time interval, the electronic device may recognize that detection of adjacent devices, each of which includes the short range wireless communication module, is not performed. Accordingly, the electronic device stops, e.g., deactivates, the short range wireless communication module. In this case, the electronic device may deactivate a function for detecting adjacent devices by using the short range wireless communication module.

As described above, the electronic device may include respective units or components for controlling short range wireless communication. In this case, the respective units or components for controlling short range wireless communication may be configured into one unit or component.

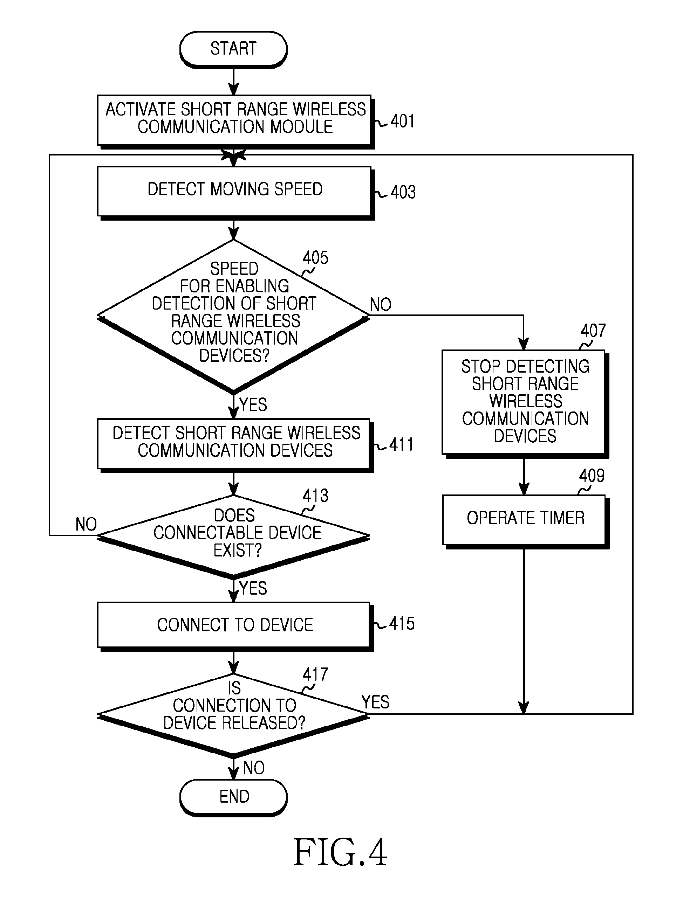

FIG. 4 illustrates a process for controlling short range wireless communication according to the moving speed of the electronic device in an electronic device according to an embodiment of the present invention.

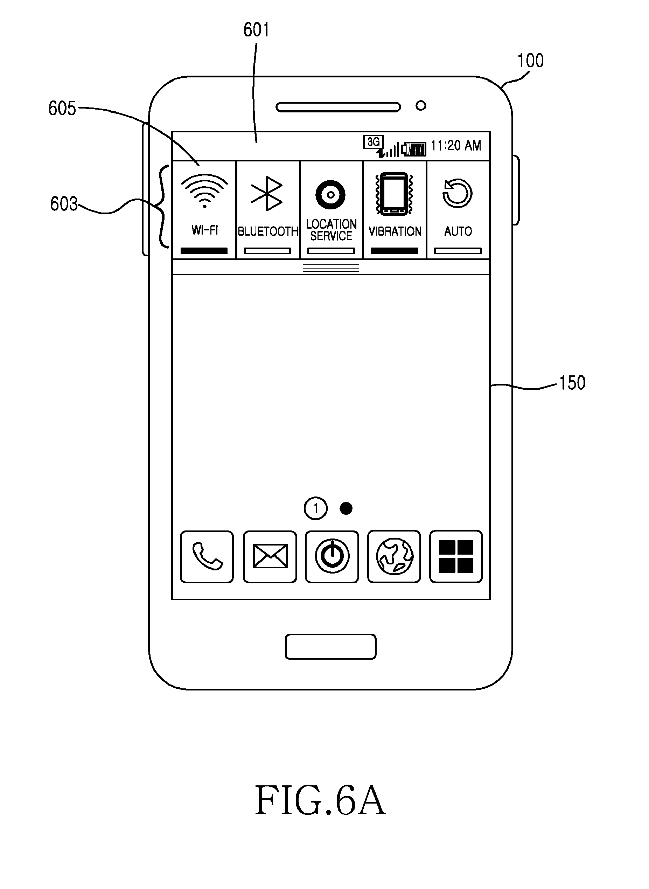

Referring to FIG. 4, in step 401 the electronic device activates a short range wireless communication module. For example, as illustrated in FIG. 6A, when an input on the area of a notification bar 601 of the touchscreen 150 is detected, the electronic device 100 displays a control panel 603. Thereafter, when an input is detected with respect to Wi-Fi 605 in the control panel 603 displayed on the touchscreen 150, the electronic device 100 activates a Wi-Fi 605 module.

When the short range wireless communication module is activated, the electronic device detects the moving speed of the electronic device in step 403. Herein, the moving speed of the electronic device refers to a value obtained by dividing a movement distance from a first point to a second point by a movement time. In this case, the electronic device may detect the moving speed by using at least one of a GPS and a G-sensor. For example, it is possible to detect the moving speed of the electronic device in consideration of the location information which is identified by a GPS signal and the time at which the GPS signal is received.

In another example, when it is determined that the moving speed is maintained at more than a predetermined acceleration for the reference time interval, the electronic device recognizes that movement is kept constant.

In another example, when the GPS signal is not detected after detection of the moving speed using the GPS signal, the electronic device may detect the moving speed by using the G-sensor in consideration of variations in speed from a time point at which the GPS signal is not detected.

When detecting the moving speed of the electronic device, the electronic device determines whether the moving speed is a speed for enabling detection of short range wireless communication devices in step 405. For example, in the case of detecting the moving speed of the electronic device, the electronic device determines whether the moving speed exceeds a reference speed for detection of adjacent devices, each of which includes a short range wireless communication module. As another example, it is possible to determine whether the moving speed of the electronic device is maintained at more than the reference speed for a reference time interval.

When it is determined that the moving speed is not the speed for enabling the detection of short range wireless communication devices in step 405, the electronic device proceeds to step 407. In step 407, the electronic device stops detecting the short range wireless communication devices. For example, when the moving speed exceeds the reference speed, the electronic device recognizes that the detection of adjacent devices, each of which includes the short range wireless communication module, is not performed.

In another example, when the moving speed of the electronic device is maintained at more than the reference speed for the reference time interval, the electronic device may recognize that detection of adjacent devices, each of which includes the short range wireless communication module, is not performed.

After stopping detecting short range wireless communication devices in step 407, the electronic device operates a timer in step 409. For example, the electronic device operates a timer to return to step 403 for detecting the moving speed in order to again performing detection of short range wireless communication devices.

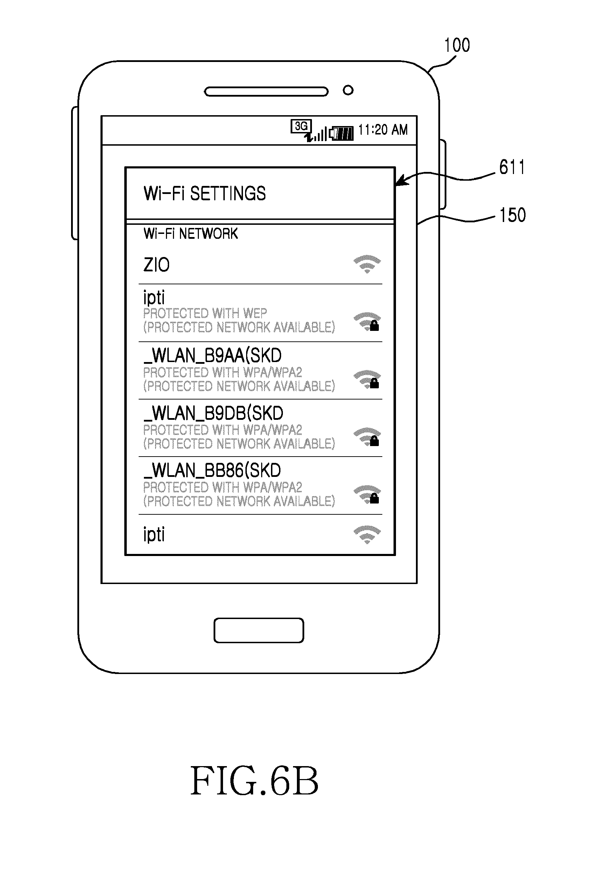

When it is determined that the moving speed is the speed for enabling the detection of short range wireless communication devices in step 405, the electronic device proceeds to step 411. In step 411, the electronic detects short range wireless communication devices. For example, when activating the Wi-Fi module, the electronic device receives a beacon message which is broadcast by at least one Access Point (AP). Herein, the beacon message may include the name (SSID) of the AP, the physical address of the AP, and an AP encryption scheme (for example, WPA2) of the AP. When receiving the beacon message, the electronic device displays an AP list 611 on the touchscreen 150 as illustrated in FIG. 6B. In this case, the electronic device 100 may display the name of the AP, whether AP encryption is set, an AP encryption scheme (for example, WPA2) of the AP, and a received signal strength indicator (RSSI).

Thereafter, in step 413, the electronic device determines whether a connectable device exists. For example, the electronic device attempts to connect to at least one AP in consideration of priorities of APs in the AP list 611 displayed on the touchscreen 150 as illustrated in FIG. 6B. Herein, the priorities may be determined based on whether the electronic device may be determined based on whether the electronic device has been previously connected to the AP, whether AP encryption is set, a signal strength in the AP and/or combination thereof. When no connectable device exists, the electronic device returns to step 403 to detect the moving speed of the electronic device.

However, when it is determined that a connectable device exists in step 413, the electronic device proceeds to step 415. In step 415, the electronic device performs a connection to the device.

Thereafter, in step 417, the electronic device determines whether connection to the short range wireless communication device is released. For example, when the strength (RSSI) of the signal received from a device connected thereto is smaller than the strength of a reference signal, the electronic device recognizes that the connection to the device is released.

In another example, when signals are not received during the reference time interval from the device connected thereto, the electronic device may recognize that the connection to the device is released.

In another example, when a response is not received from the device a predetermined number of times, the electronic device may recognize that the connection to the device is released.

When the connection to the short range wireless communication device is released, the electronic device returns to step 403 to detect the moving speed of the electronic device.

However, when it is determined that the connection to the short range wireless communication device is not released in step 417, the electronic device ends the process.

In above-described embodiment, the electronic device detects the moving speed of the electronic device when activating the short range wireless communication module. In accordance with another embodiment of the present invention, the electronic device may detect the moving speed of the electronic device during short range wireless communication.

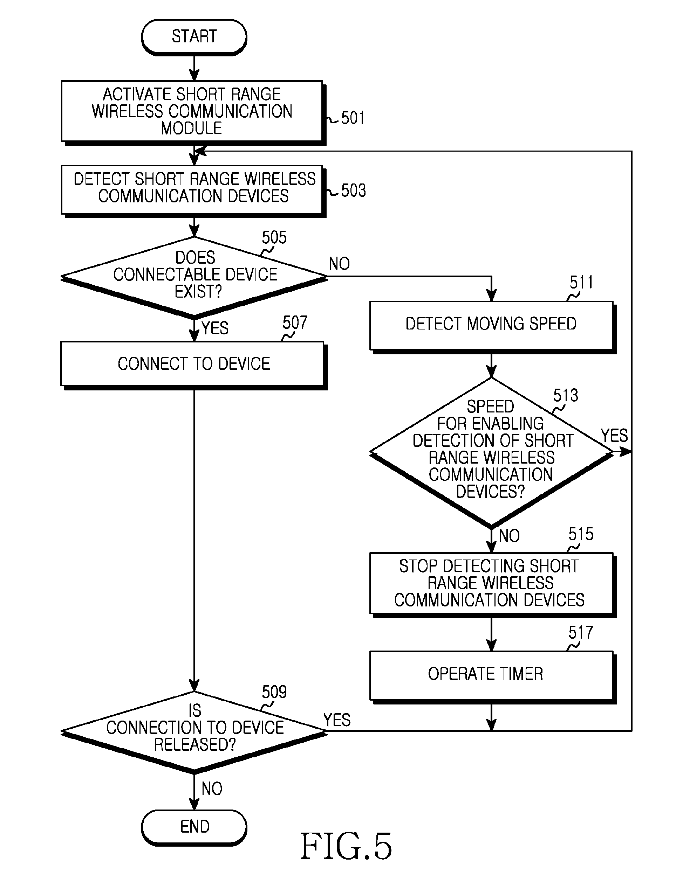

FIG. 5 illustrates a process for controlling short range wireless communication according to the moving speed of the electronic device in an electronic device according to an embodiment of the present invention.

Referring to FIG. 5, in step 501 the electronic device activates a short range wireless communication module. For example, when an input is detected on the area of a notification bar 601 of the touchscreen 150 as illustrated in FIG. 6A, the electronic device 100 displays a control panel 603. Thereafter, when an input is detected with respect to Wi-Fi 605 in the control panel 603 displayed on the touchscreen 150, the electronic device 100 activates the Wi-Fi 605.

When the short range wireless communication module is activated, the electronic device detects short range wireless communication devices in step 503. For example, when activating a Wi-Fi module, the electronic device receives a beacon message which is broadcast by at least one Access Point (AP). Herein, the beacon message may include the name (SSID) of the AP, the physical address of the AP, and an AP encryption scheme (for example, WPA2) of the AP. When receiving the beacon message, the electronic device displays an AP list 611 on the touchscreen 150 as illustrated in FIG. 6B. In this case, the electronic device 100 may display the name of the AP, whether AP encryption is set, an AP encryption scheme (for example, WPA2) of the AP, and an RSSI.

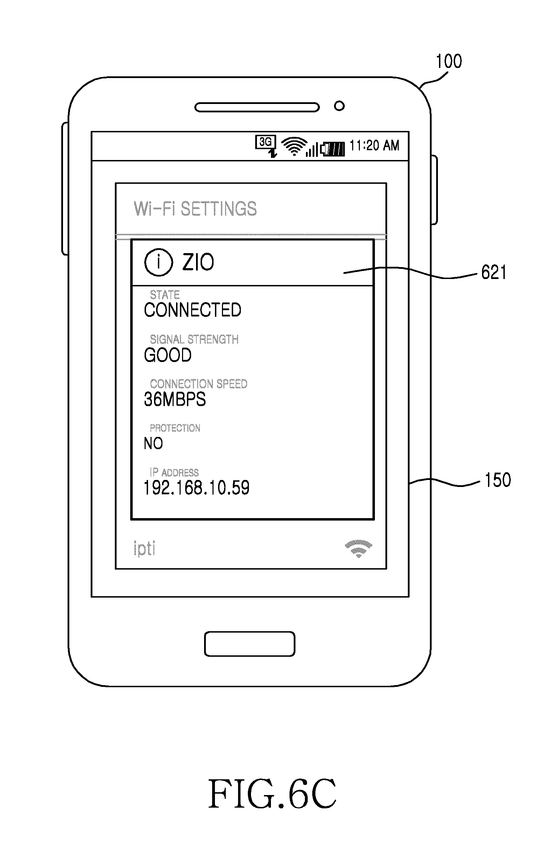

After performing detection of the short range wireless communication device, the electronic device determines whether a connectable device exists in step 505. For example, the electronic device attempts to connect to at least one AP in consideration of priorities of APs in the AP list 611 displayed on the touchscreen 150 as illustrated in FIG. 6B. Herein, the priorities may be determined based on whether the electronic device has been previously connected to the AP, whether AP encryption is set, a signal strength in the AP, and/or combination thereof. If the electronic device is successful in connecting to at least one AP in the AP list 611 displayed on the touchscreen 150, the details of the connection 621 are displayed as illustrated in FIG. 6C.
If no connectable device exists in step 505, the electronic device proceeds to step 511. In step 511, the electronic device detects the moving speed of the electronic device, using a GPS and/or a G-sensor.

When detecting the moving speed of the electronic device in step 511, the electronic device determines whether the moving speed is a speed for enabling detection of short range wireless communication devices in step 513. For example, after detecting the moving speed of the electronic device, the electronic device determines whether the moving speed exceeds a reference speed for detection of adjacent devices, each of which includes a short range wireless communication module. In another example, it is possible to determine whether the moving speed of the electronic device is maintained at more than the reference speed for a reference time interval. When the moving speed is the speed for enabling the detection of short range wireless communication devices, the electronic device returns to step 503 to detect short range wireless communication devices.

However, if the moving speed is not the speed for enabling the detection of short range wireless communication devices in step 513, the electronic device proceeds to step 515. In step 515, the electronic device stops detecting the short range wireless communication devices. For example, when the moving speed exceeds the reference speed, the electronic device recognizes that the detection of adjacent devices, each of which includes a short range wireless communication module, is not performed. In addition, when the moving speed of the electronic device is maintained at more than the reference speed for the reference time interval, the electronic device may recognize that detection of adjacent devices, each of which includes a short range wireless communication module, is not performed.

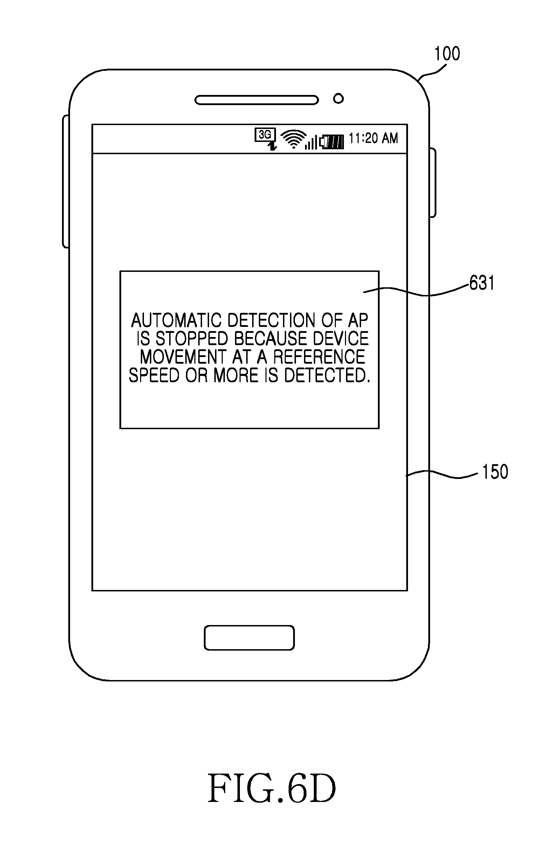

After stopping detecting short range wireless communication devices in step 515, the electronic device notifies the user of the electronic device, e.g., using message 631 of FIG. 6D, and operates a timer in step 517. For example, the electronic device operates a timer to return to step 503 to detect the moving speed in order to again perform detection of short range wireless communication devices.

When it is determined that a connectable device exists in step 505, the electronic device proceeds to step 507, and performs a connection to the connectable device.

After performing connection to the connectable device in step 507, the electronic device determines whether the connection to the connectable device is released in step 509. For example, when the strength (RSSI) of the signal received from a device connected thereto is smaller than the strength of a reference signal, the electronic device recognizes that the connection to the device is released.

In another example, when signals are not received during the reference time interval from the device connected thereto, the electronic device may recognize that the connection to the device is released.

In another example, when a response is not received from the device a predetermined number of times, the electronic device may recognize that the connection to the device is released.

When the connection to the device is released, the electronic device returns to step 503 to perform the detection of short range wireless communication devices.

When it is determined that the connection to the device is not released in step 509, the electronic device ends the process.

In the above-described embodiment, the electronic device detects the moving speed of the electronic device when activating the short range wireless communication module. In another embodiment, the electronic device may detect the moving speed of the electronic device during short range wireless communication. In the above-described embodiment, when the moving speed is not the speed for enabling the detection of short range wireless communication devices, the electronic device restricts the detection of adjacent devices including a short range wireless communication module. In another embodiment, when the moving speed is not the speed for enabling the detection of short range wireless communication devices, the electronic device may deactivate the short range wireless communication module.

In the above-described embodiment, the electronic device detects the moving speed after the reference time interval by using the timer. In another embodiment, the electronic device may continuously detect the moving speed. In the above-described embodiment, the electronic device deactivates the short range wireless communication module when the moving speed of the electronic device exceeds the reference speed.

In another embodiment, when the moving speed of the electronic device is less than or equal to the reference speed after the short range wireless communication module is deactivated, the electronic device may activate the short range wireless communication module.

It will be appreciated that embodiments of the present invention according to the claims and description in the specification can be realized in the form of hardware, software or a combination of hardware and software. Any such software may be stored in a non-transitory computer readable storage medium. The non-transitory computer readable storage medium stores one or more programs (software modules), the one or more programs comprising instructions, which when executed by one or more processors in an electronic device, cause the electronic device to perform a method of the present invention. Any such software may be stored in the form of volatile or non-volatile storage such as, for example, a ROM, whether erasable or rewritable or not, or in the form of memory such as, for example, RAM, memory chips, integrated circuits or on an optically or magnetically readable medium such as, for example, a CD, DVD, magnetic disk, magnetic tape, or the like. It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

Throughout the description and claims of this specification, the words "comprise" and "contain" and variations of the words, for example "comprising" and "comprises", means "including but not limited to", and is not intended to (and does not) exclude other components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

While the invention has been shown and described with reference to certain embodiments thereof, it will be understood by those skilled in the art that various changes in form and details may be made therein without departing from the scope of the invention as defined by the appended claims.

## Claims

1. A method for controlling short range wireless communication in an electronic device, the method comprising:
detecting a moving speed of the electronic device; and
if the detected moving speed exceeds a reference speed, stopping a short range wireless communication module.

2. The method of claim 1, wherein stopping a short range wireless communication module comprises deactivating the short range wireless communication module.

3. The method of claim 1 or claim 2, wherein detecting a moving speed comprises calculating a moving speed according to a distance moved from a first point to a second point and a movement time.

4. The method of any one of the preceding claims, wherein detecting a moving speed comprises detecting a moving speed of the electronic device by using at least one of a Global Positioning System, GPS, and a gravity sensor, G-sensor.

5. The method of any one of the preceding claims, wherein stopping a short range wireless communication module comprises deactivating a function for detecting adjacent devices using the short range wireless communication module when the detected moving speed exceeds the reference speed.

6. The method of any one of the preceding claims, wherein stopping a short range wireless communication module comprises or further comprises deactivating the short range wireless communication module when the detected moving speed is maintained at more than the reference speed for a reference time interval.

7. The method of any one of the preceding claims, further comprising:
if the short range wireless communication module is stopped, detecting a moving speed of the electronic device; and
if the detected moving speed is less than or equal to the reference speed, starting the short range wireless communication module.

8. The method of claim 7, wherein detecting a moving speed of the electronic device comprises detecting a moving speed of the electronic device after a reference time interval when the short range wireless communication module is stopped.

9. The method of claim 7 or claim 8, wherein starting the short range wireless communication module comprises activating a function for detecting adjacent devices by using the short range wireless communication module if the detected moving speed is less than or equal to the reference speed.

10. The method of any one of claims 7 to 9, wherein starting the short range wireless communication module comprises or further comprises activating the short range wireless communication module when the detected moving speed is maintained at less than the reference speed for more than a reference time interval.

11. An electronic device comprising a processor unit arranged to perform the method of any one of claims 1 to 10.

12. A computer program comprising computer program code means adapted to perform all the steps of any one of the method claims 1 to 10 when the computer program is run on a processor.
